# EUROPÄISCHE PATENTANMELDUNG

(11) **EP 4 706 881 A2**
(43) Veröffentlichungstag der Anmeldung: **11.03.2026**
(21) Anmeldenummer: 25199397.8
(22) Anmeldetag: 01.09.2025
(51) Int. Cl.: B23Q 3/06, B25B 1/18, B25B 1/02, B25B 1/10, B23Q 3/08

(54) **SPANNVORRICHTUNG, SPANNSYSTEM, WERKZEUGMASCHINE, VERFAHREN ZUM FESTSPANNEN EINES WERKSTÜCKS UND VERFAHREN ZUM BEARBEITEN EINES WERKSTÜCKS**

(30) Priorität: 06.09.2024 DE 102024125656
(71) Anmelder: DMG MORI Pfronten GmbH, 87459 Pfronten (DE)
(72) Erfinder: Jansen, Benjamin, 87647 Unterthingau (DE)
(74) Vertreter: MERH-IP Matias Erny Reichl Hoffmann Patentanwälte PartG mbB

(57) **Zusammenfassung**

Die Erfindung stellt eine Spannvorrichtung 100 zum Einsatz in einer Werkzeugmaschine bereit, wobei die Spannvorrichtung 100 zum Festspannen eines Werkstücks 2000 eingerichtet ist und dazu einen Grundkörper 1 und zumindest eine gegenüber dem Grundkörper 1 verfahrbare Spanneinheit 2 umfasst. Die Spanneinheit 2 umfasst ihrerseits einen Positionierungskörper 21 und einen Spannkörper 22, wobei der Spannkörper 22 eingerichtet ist, mit einem festzuspannenden Werkstück 2000 in Kontakt zu kommen. Der Positionierungskörper 21 der Spanneinheit 2 ist entlang einer Positionierungsrichtung beweglich am Grundkörper 1 gelagert, wobei die Spannvorrichtung 100 zum Umsetzen einer Positionierungsbewegung der Spanneinheit 2 eine Verfahrmechanik 4 umfasst, über die der Positionierungskörper 21 relativ zum Grundkörper 1 entlang der Positionierungsrichtung verfahrbar ist, um die Spanneinheit 2 für ein anschließendes Festspannen des Werkstücks 2000 zu positionieren. Der Spannkörper 22 ist entlang einer Spannrichtung beweglich am Positionierungskörper 21 gelagert, wobei die Spanneinheit 2 zum Umsetzen einer Spannbewegung der Spanneinheit 2 einen pneumatisch betriebenen und/oder einen hydraulisch betriebenen Spannaktor 23 umfasst, über den der Spannkörper 22 relativ zum Positionierungskörper 21 entlang der Spannrichtung verfahrbar ist, um das Werkstück 2000 festzuspannen.

## Beschreibung

### Technisches Gebiet

Die vorliegende Erfindung betrifft eine Spannvorrichtung, ein Spannsystem, eine Werkzeugmaschine, ein Verfahren zum Festspannen eines Werkstücks und ein Verfahren zum Bearbeiten eines Werkstücks.

### Hintergrund der Erfindung

Aus dem Bereich der automatisierten Fertigung sind numerisch gesteuerte Werkzeugmaschinen bekannt, die zur teil- oder vollautomatisierten Bearbeitung von Werkstücken eingesetzt werden.

Die Werkzeugmaschinen verfügen dabei meist über eine Vielzahl zueinander beweglich gelagerter Komponenten, die über steuerbare Linear- und /oder Rundachsen relativ zueinander verfahren werden können, um so die für die Werkstückbearbeitung nötigen Relativbewegungen zwischen Bearbeitungswerkzeug und Werkstück umsetzen zu können.

Um eine präzise Bearbeitung von Werkstücken durch die Werkzeugmaschine zu ermöglichen, müssen die Werkstücke ortsfest fixiert werden, üblicherweise im Arbeitsraum der Werkzeugmaschine. Dies geschieht über Spannvorrichtungen, bei denen das zu bearbeitende Werkstück durch ein oder mehrere Spannkörper der Spannvorrichtung festgespannt wird. Dieser Vorgang wird auch als "Rüstvorgang" bezeichnet.

Die Spannvorrichtungen sind üblicherweise auf eine spezifische Art von Werkstück angepasst und werden teilweise im Zuge des Rüstvorgangs noch händisch vom Maschinenbediener betätigt oder beispielsweise mit Hilfe hydraulisch betriebener Aktoren.

Damit ist nicht nur die Einsatzmöglichkeit im Bereich der automatisierten Fertigung, insbesondere bei einer Vielzahl unterschiedlich ausgestalteter Werkstücke, stark eingeschränkt, sondern im Falle eines hydraulischen Festspannens auch mit einem vergleichsweise hohen Energieverbrauch verbunden.

### Zusammenfassung

Eine Aufgabe der vorliegenden Erfindung ist es daher, eine verbesserte Möglichkeit zum Spannen einer Vielzahl unterschiedlicher Werkstücke bereitzustellen, die insbesondere ein effizientes, zuverlässiges und automatisierbares Festspannen des Werkstücks für eine anschließende Werkstückbearbeitung gestattet.

Zur Lösung dieser Aufgabe wird eine Spannvorrichtung nach Anspruch 1, ein Spannsystem nach Anspruch 13, eine Werkzeugmaschine nach Anspruch 15, ein Verfahren zum Festspannen eines Werkstücks nach Anspruch 16 und ein Verfahren zum Bearbeiten eines Werkstücks nach Anspruch 21 bereitgestellt.

Die jeweiligen abhängigen Ansprüche beziehen sich dabei auf bevorzugte Ausführungsformen, die jeweils für sich genommen oder in Kombination bereitgestellt werden können.

Gemäß einem Aspekt der Erfindung wird Spannvorrichtung zum Einsatz in einer Werkzeugmaschine bereitgestellt, wobei die Spannvorrichtung zum Festspannen eines Werkstücks eingerichtet ist und dazu einen Grundkörper und zumindest eine gegenüber dem Grundkörper verfahrbare Spanneinheit umfasst. Die Spanneinheit umfasst ihrerseits einen Positionierungskörper und einen Spannkörper, wobei der Spannkörper eingerichtet ist, mit einem festzuspannenden Werkstück in Kontakt zu kommen. Der Positionierungskörper der Spanneinheit ist entlang einer Positionierungsrichtung beweglich am Grundkörper gelagert, wobei die Spannvorrichtung zum Umsetzen einer Positionierungsbewegung der Spanneinheit eine Verfahrmechanik umfasst, über die der Positionierungskörper relativ zum Grundkörper entlang der Positionierungsrichtung verfahrbar ist, um die Spanneinheit für ein anschließendes Festspannen des Werkstücks zu positionieren bzw. vorzupositionieren. Der Spannkörper ist entlang einer Spannrichtung beweglich am Positionierungskörper gelagert, wobei die Spanneinheit zum Umsetzen einer Spannbewegung der Spanneinheit einen pneumatisch betriebenen und/oder einen hydraulisch betriebenen Spannaktor umfasst, über den der Spannkörper relativ zum Positionierungskörper entlang der Spannrichtung verfahrbar ist, um das Werkstück festzuspannen.

Damit wird eine Spannvorrichtung bereitgestellt, die ein Festspannen eines Werkstückes in zwei Stufen ermöglicht. In einer ersten Stufe kann dabei eine Vorpositionierung erfolgen, im Zuge derer die Spanneinheit durch die Verfahrmechanik verfahren wird, um diese "grob" an die Abmessungen des festzuspannenden Werkstücks anzupassen. In einer zweiten Stufe kann dann das Festspannen des Werkstücks durch die eigentliche Spannbewegung mittels des Spannaktors erfolgen. Durch die Vorpositionierung kann dabei die durch den Spannaktor zu bewirkende und von den Abmessungen des Werkstücks abhängige Spannbewegung auf ein Optimum eingestellt werden.

Ein diesbezügliches Optimum ist beispielsweise so zu verstehen, dass das Werkstück nach erfolgter Vorpositionierung ohne Schwierigkeiten in die Spannvorrichtung eingesetzt werden kann, also das Spiel zwischen Werkstück und Spannvorrichtung nicht derart gering ist, dass das Werkstück leicht verkeilt, und zudem ein für die Spannbewegung notwendiger Verfahrweg des Spannkörpers auch innerhalb der durch den Spannaktor vorgegebenen Grenzen liegt und vorzugsweise auch möglichst klein ausfällt, um die Energiekosten beim Einsatz der Hydraulik oder Pneumatik gering zu halten.

Das beschriebene Festspannen in zwei Stufen gestattet dabei ein zuverlässiges und sicheres Festspannen für eine Vielzahl unterschiedlich ausgestalteter Werkstücke, da die eigentliche Spannbewegung im Grunde unverändert bleiben kann und die Anpassung der Spannvorrichtung an unterschiedliche Werkstücke durch die Vorpositionierung über die Verfahrmechanik erfolgt.

Damit sind auch die Voraussetzungen für ein vollautomatisiertes Festspannen unterschiedlich ausgestalteter Werkstücke geschaffen. So können sowohl Verfahrmechanik als auch Spannaktor beispielsweise durch die Werkzeugmaschine selbst angetrieben werden, um ein eingesetztes Werkstück festzuspannen.

Die Spannvorrichtung kann ein eigenes Hydraulikaggregat- oder Pneumatikaggregat zur Versorgung des Spannaktors umfassen oder über eine Hydraulikschnittstelle oder eine Pneumatikschnittstelle verfügen, die mit einem externen Hydrauliksystem oder einem externen Pneumatiksystem verbindbar ist, um den Spannaktor mit hydraulischer oder pneumatischer Energie zu versorgen.

Vorzugsweise ist der Spannaktor ausgelegt, eine Spannkraft von bis zu 10 kN, weiter vorzugsweise von bis zu 20 kN, weiter vorzugsweise von bis zu 40 kN und weiter vorzugsweise von bis zu 100 kN aufbringen zu können. Dies schließt keineswegs noch höhere Spannkräfte aus.

Die Verfahrmechanik ist vorzugsweise rein mechanisch ausgestaltet, ohne Beteiligung eines hydraulischen oder pneumatischen Aktors. Damit können problemlos die für die Positionierungsbewegung teilweise groß ausfallenden Verfahrwege energiesparend und vor allem schnell umgesetzt werden. Dadurch verringern sich wiederum die Rüstzeiten an der Werkzeugmaschine, was insbesondere im Bereich der Massenfertigung zu einer höheren Fertigungsrate führt.

Ein Verfahren entlang der Spannrichtung oder der Positionierungsrichtung ist dabei so zu verstehen, dass der betreffende Körper sowohl in als auch entgegen der jeweiligen Richtung verfahren werden kann.

In einer bevorzugten Ausführungsform ist der Positionierungskörper in einem ersten Verfahrbereich verfahrbar, der sich von einer ersten Endposition des Positionierungskörper in Bezug auf den Grundkörper bis zu einer zweiten Endposition des Positionierungskörpers in Bezug auf den Grundkörper erstreckt. Der Spannkörper ist in einem zweiten Verfahrbereich verfahrbar, der sich von einer ersten Endposition des Spannkörpers in Bezug auf den Positionierungskörper bis zu einer zweiten Endposition des Spannkörpers in Bezug auf den Positionierungskörper erstreckt. Eine Länge des zweiten Verfahrbereichs ist dabei kleiner gleich 50% einer Länge des ersten Verfahrbereichs ist, vorzugsweise ist die Länge des zweiten Verfahrbereichs kleiner gleich 10%, weiter bevorzugt kleiner gleich 5 % und besonders bevorzugt kleiner gleich 1% der Länge des ersten Verfahrbereichs.

Durch die unterschiedlich lang ausgestalteten Verfahrbereiche wird sichergestellt, dass bei gleichbleibend langer Spannbewegung, längere Positionierungsbewegungen durch die Verfahrmechanik umgesetzt werden können, um so die Spannvorrichtung auch für stark unterschiedlich großen Werkstücken einsetzen zu können und diese dabei gleichmäßig und sicher festzuspannen.

Unter einem Verfahrbereich ist dabei die Menge aller Positionen bzw. Relativpositionen zu verstehen, die durch ein Verfahren des jeweiligen Körpers erreicht werden können. Die jeweiligen Endpositionen sind dabei als Grenzen der besagten Menge zu verstehen, an denen eine Verfahrbewegung, mit der die Endposition erreicht wurde, nicht weiter fortgesetzt werden kann, sondern nur noch eine der besagten Verfahrbewegung entgegengerichtete Rückfahrbewegung verbleibt.

Vorzugsweise ist die Länge des ersten Verfahrbereichs kleiner gleich 100 mm, weiter vorzugsweise kleiner gleich 200 mm, weiter vorzugsweise kleiner gleich 300 mm und weiter vorzugsweise kleiner gleich 500 mm. Dies schließt keineswegs noch größere Verfahrbereiche aus.

Vorzugsweise ist die Länge des zweiten Verfahrbereichs, der auch als möglicher Spannhub der Spanneinheit gesehen werden kann, kleiner gleich 1 mm, weiter vorzugsweise kleiner gleich 2 mm, weiter vorzugsweise kleiner gleich 5 mm, weiter vorzugsweise kleiner gleich 10 mm und weiter vorzugsweise kleiner gleich 25 mm. Dies schließt keineswegs noch größere Verfahrbereiche aus.

In einer bevorzugten Ausführungsform verläuft die Positionierungsrichtung parallel zur Spannrichtung.

Vereinfacht gesagt, bewegen sich Spannkörper und Positionierungskörper der Spanneinheit in diesem Fall im Zuge der jeweiligen Spann- und Positionierungsrichtung in die gleiche räumliche Richtung.

Allerdings ist die Spannvorrichtung nicht auf eine derartige Ausgestaltung beschränkt. So können Spannrichtung und Positionierungsrichtung auch winklig und insbesondere rechtwinklig zueinander stehen.

In einer bevorzugten Ausführungsform umfasst die Verfahrmechanik einen Spindeltrieb.

Ein Spindeltrieb stellt eine vergleichsweise kostengünstige, einfach umzusetzende und rein mechanische Möglichkeit zum Umsetzen der Positionierungsbewegung dar.

In einer bevorzugten Ausführungsform ist die Verfahrmechanik eine selbsthemmende Verfahrmechanik.

Dadurch kann die Verfahrmechanik selbst beispielsweise als eine Art Arretiereinrichtung verwendet werden, die verhindert, dass eine beim Festspannen durch den Spannkörper auftretende Spannkraft eine ungewollte Bewegung des Positionierungskörpers relativ zum Grundkörper bewirkt.

Hier kann es unter Umständen allerdings dazu kommen, dass die Spannkraft oder auch bei der Werkstückbearbeitung auftretende Bearbeitungskräfte direkt auf die Verfahrmechanik wirken, insbesondere dann, wenn Positionierungs- und Spannrichtung parallel zueinander verlaufen.

Unter anderem aus diesem Grund wird die nachfolgende Ausführung mit einer zusätzlichen Klemmeinrichtung vorgeschlagen, über die beispielsweise die Verfahrmechanik im genannten Fall entlastet werden kann.

So umfasst die Spannvorrichtung in einer bevorzugten Ausführungsform eine Klemmeinrichtung, die zwischen einem festklemmenden Zustand und einem klemmungsfreien Zustand umschaltbar ist, wobei im festklemmenden Zustand der Positionierungskörper relativ zum Grundkörper durch eine von der Klemmeinrichtung aufgebrachte Klemmkraft fixiert ist, und im klemmungsfreien Zustand der Positionierungskörper relativ zum Grundkörper nicht durch die Klemmeinrichtung fixiert ist.

Auf diese Weise kann im festklemmenden Zustand die Position des Positionierungskörpers relativ zum Grundkörper über die Klemmeinrichtung in einer konstanten Position gehalten werden. Damit kann eine Bewegung des Positionierungskörpers relativ zum Grundkörper zuverlässig unterbunden werden, was wiederum verhindert, dass sich ein Spannzustand des Werkstücks in Folge unerwünschter Bewegungen des Positionierungskörpers teilweise oder ganz löst.

Damit können auf den Positionierungskörper wirkende Kräfte über die zwischen dem Positionierungskörper und dem Grundkörper befindliche Klemmschnittstelle der Klemmvorrichtung übertragen werden. Besagte Kräfte können dabei nicht nur durch die Spannkraft am Spannungskörper, sondern auch durch Bearbeitungskräfte bei einer anschließenden Werkstückbearbeitung verursacht werden.

Vorzugsweise wird die Klemmeinrichtung nach dem Verfahren des Positionierungskörpers und vor dem Festspannen des Werkstücks in einen festklemmenden Zustand umgeschaltet.

Vorzugsweise umfasst die Klemmeinrichtung zumindest zwei Klemmschnittstellen, zwischen dem Positionierungskörper und dem Grundkörper, über die jeweils eine zwischen den beiden Körpern wirkende Klemmkraft durch die Klemmeinrichtung aufbringbar ist. Vorzugsweise sind diese Klemmschnittstellen in einer zur Positionierungsrichtung winklig, insbesondere rechtwinklig, stehenden Richtung voneinander beabstandet.

Dadurch kann ein symmetrischer Aufbau umgesetzt werden, der zu einer gleichmäßigeren Belastung der Komponenten der Spannvorrichtung führt und auch zuverlässig ein durch kleine Verdrehungen des Positionierungskörpers relativ zum Grundkörper bedingtes Verkeilen verhindern kann.

Im klemmungsfreien Zustand ist die aufgebrachte Klemmkraft vorzugsweise gleich Null, was aber nicht zwingend ist. Allerdings ist es vorteilhaft, wenn diese zumindest wesentlich geringer ausfällt als im festklemmenden Zustand, also kleiner gleich 5%, 2% oder 1% der Klemmkraft im festklemmenden Zustand.

In einer bevorzugten Ausführungsform ist der Positionierungskörper über eine Linearführung beweglich am Grundkörper gelagert, die zwei parallel zur Positionierungsrichtung verlaufende, am Grundkörper befestigte Führungselemente umfasst.

Dadurch wird eine symmetrische Lagerung für die Positionierungsbewegung bereitgestellt, die eine unerwünschtes Verkippen oder Verkeilen des Positionierungskörpers bei der Positionierungsbewegung verhindert.

Die am Grundkörper befestigten Führungselemente können dabei auch als Teil des Grundkörpers verstanden werden.

Vorzugsweise sind die Oberflächenkonturen der Führungselemente zumindest teilweise oder vollständig konvex ausgestaltet, vorzugsweise über den gesamten ersten Verfahrbereich hinweg.

Die konvexe Ausgestaltung gestattet ein einfaches Abgleiten von Spänen, die bei einer Werkstückbearbeitung anfallend.

Vorzugsweise weist die Oberflächenkontur der Führungselemente in einem orthogonal zur Positionierungsrichtung stehenden Querschnitt einen elliptischen oder kreisbogenförmigen Teilabschnitt auf. Insbesondere ist die Oberflächenkontur in besagtem Querschnitt vollständig elliptisch oder kreisrund.

Vorzugsweise sind die Führungselemente als Führungsstangen ausgeführt, insbesondere als massive Führungsstangen.

In einer bevorzugten Ausführungsform weist der Grundkörper einen Auffangbereich für Späne auf, der zwischen den Führungselementen der Linearführung angeordnet ist.

Dadurch können anfallende Späne von der Werkstückbearbeitung direkt in den Auffangbereich fallen, und damit aus dem Bearbeitungsbereich abgeführt werden.

Vorzugsweise umfasst der Grundkörper ein oder mehrere Auslassöffnungen, über die im Auffangbereich gesammelte Späne in eine Umgebung der Spannvorrichtung abführbar sind.

Dadurch können aufgefangene Späne beispielsweise gesammelt in einen Auffangbereich im Arbeitsraum der Werkzeugmaschine abgeführt werden.

Vorzugsweise weist der Grundköper im Auffangbereich eine zu der einen oder mehreren Auslassöffnungen hin winklig angestellte Grundfläche auf, wodurch die Abführung der Späne aus dem Auffangbereich der Spannvorrichtung verbessert werden kann.

In einer bevorzugten Ausführungsform ist die Klemmeinrichtung an der Linearführung angeordnet und ist eingerichtet, im festklemmenden Zustand die Klemmkraft in einer Klemmschnittstelle zwischen dem Positionierungskörper und zumindest einem der zwei Führungselemente aufzubringen. Vorzugsweise ist die Klemmeinrichtung derart eingerichtet, dass im festklemmenden Zustand Klemmkräfte in je einer Klemmschnittstelle zwischen dem Positionierungskörper und jedem der zwei Führungselemente aufzubringen.

Auf diese Weise können Linearführung und Klemmeinrichtung als gemeinsame Baugruppe bereitgestellt werden, was nicht nur den benötigen Bauraum verringert, sondern auch die Anzahl an Wirkschnittstellen des Positionierungskörpers mit dem Grundkörper reduziert.

Beispielhaft ist die Klemmeinrichtung vorzugsweise als am Positionierungskörper befestigte Klemmbuchse oder als Paar von Klemmbuchsen ausgeführt, durch die hindurch das zumindest eine Führungselement, respektive je eines der zwei Führungselemente, hindurchgeführt ist/sind.

In einer bevorzugten Ausführungsform umfasst die Spannvorrichtung einen weiteren Spannkörper, der insbesondere unbeweglich am Grundkörper befestigt ist, wobei das festzuspannende Werkstück durch die Spannbewegung der Spanneinheit zwischen dem Spannkörper der Spanneinheit und dem weiteren Spannkörper festspannbar ist.

Alternativ kann die Spannvorrichtung auch eine weitere verfahrbare Spanneinheit umfassen, die im Wesentlichen so aufgebaut sein kann, wie die bereits vorstehend beschriebene Spanneinheit.

Vorzugsweise verläuft eine Spannfläche des Spannkörpers der Spanneinheit vorzugsweise parallel zu einer Spannfläche des weiteren Spannkörpers, wodurch im Grunde eine schraubstockähnliche Ausgestaltung der Spannvorrichtung vorliegt.

In einer bevorzugten Ausführungsform umfasst die Spannvorrichtung eine Schnittstellenvorrichtung, die derart auf eine Aufnahmevorrichtung, insbesondere auf eine Aufnahmevorrichtung einer Werkzeugmaschine, angepasst ist, dass die Spannvorrichtung über die Schnittstellenvorrichtung lösbar in der Aufnahmevorrichtung fixierbar ist.

Die Aufnahmevorrichtung ist hierbei nicht als Teil der Spannvorrichtung zu verstehen, sondern als externe Vorrichtung, mit der die Schnittstellenvorrichtung in Wirkeingriff gebracht werden kann, um die Spannvorrichtung relativ zur Aufnahmevorrichtung lagefest zu fixieren.

Beispielsweise und nicht beschränkend kann es sich bei der Aufnahmevorrichtung um eine Palettenaufnahmevorrichtung einer Werkzeugmaschine handeln.

Unter einer lösbaren Befestigung ist im Kontext dieser Erfindung eine zerstörungsfrei lösbare Befestigung zu verstehen.

In einer bevorzugten Ausführungsform umfasst die Verfahrmechanik eine Antriebsschnittstelle, über die eine Antriebsbewegung für die Verfahrmechanik auf diese übertragbar ist, um den Positionierungskörper relativ zum Grundkörper zu verfahren.

Damit wird eine Möglichkeit zur externen Betätigung bzw. zum externen Antreiben der Verfahrmechanik geschaffen.

Alternativ kann die Spannvorrichtung aber auch eine mit der Verfahrmechanik gekoppelte Antriebseinheit, beispielsweise in Form eines Elektromotors umfassen. Dies würde zwar ein autarkes Verfahren des Positionierungskörpers gestatten, aber auch den notwendigen Bauraum der Spannvorrichtung erhöhen.

Die Antriebsschnittstelle ist dabei vorzugsweise an einer Außenseite der Spannvorrichtung und insbesondere des Grundkörpers vorgesehen, um so einen einfachen Zugang zu dieser zu gewährleisten.

Vorzugsweise umfasst die Antriebsschnittstelle einen nicht kreisrunden Profilabschnitt, beispielsweise mit polygonalem Querschnitt, um eine Kraft-/Momentübertragung auf die Verfahrmechanik zu verbessern.

Gemäß einem zweiten Aspekt der Erfindung wird ein Spannsystem zum Einsatz in einer Werkzeugmaschine bereitgestellt. Das Spannsystem umfasst eine Spannvorrichtung gemäß dem vorstehend erläuterten ersten Aspekt oder einer von dessen bevorzugten Ausführungen, wobei die die Verfahrmechanik der Spannvorrichtung zumindest eine Antriebsschnittstelle umfasst, über die eine Antriebsbewegung für die Verfahrmechanik auf diese übertragbar ist, um den Positionierungskörper relativ zum Grundkörper zu verfahren. Weiter umfasst das Spannsystem ein Verstellwerkzeug mit einer ersten Schnittstelle und einer zweiten Schnittstelle. Die erste Schnittstelle des Verstellwerkzeugs ist derart ausgebildet, dass diese von einer Werkzeugaufnahme einer Arbeitsspindel der Werkzeugmaschine aufgenommen und durch die Arbeitsspindel angetrieben werden kann. Weiter sind die zweite Schnittstelle des Verstellwerkzeugs und die Antriebsschnittstelle der Verfahrmechanik derart aufeinander angepasst, dass diese durch Relativbewegung zwischen Verstellwerkzeug und Spannvorrichtung in einen lösbaren Wirkeingriff gebracht werden können, dergestalt, dass eine Bewegung der Arbeitsspindel über das Verstellwerkzeug auf die Antriebsschnittstelle der Verfahrmechanik übertragbar ist, um so den Positionierungskörper relativ zum Grundkörper zu verfahren.

Damit wird ein durch eine Werkzeugmaschine autark bedienbares Spannsystem bereitgestellt, bei dem die Positionierungsbewegung mit Hilfe des Verstellwerkzeugs über die Arbeitsspindel der Werkzeugmaschine erfolgen kann.

Vorzugsweise ist zur Betätigung des Spannaktors eine Hydraulikschnittstelle und/oder eine Pneumatikschnittstelle der Spannvorrichtung mit einem externen Hydrauliksystem oder einem externen Pneumatiksystem, insbesondere einem Hydraulik- oder Pneumatiksystem der Werkzeugmaschine verbindbar, um den Spannaktor mit hydraulischer oder pneumatischer Energie zu versorgen.

In einer bevorzugten Ausführungsform umfasst das Verstellwerkzeug einen zwischen der ersten und der zweiten Schnittstelle angeordneten Drehmomentbegrenzer und/oder ein vorgespanntes Ausgleichselement, das eine Ausgleichsbewegung der ersten Schnittstelle relativ zur zweiten Schnittstelle gestattet. Das Ausgleichselement kann beispielsweise elastisch oder viskoelastisch ausgeführt sein.

Dadurch kann zum einen ein Drehmoment begrenzt werden als auch eine ungenaue Anfahrbewegung des Verstellwerkzeugs an die Antriebsschnittstelle ausgeglichen werden, um Beschädigungen der Spannvorrichtung und insbesondere der Verfahrmechanik zu verhindern.

Gemäß einem dritten Aspekt der Erfindung wird eine Werkzeugmaschine zur Bearbeitung eines Werkstücks bereitgestellt, die zumindest eine Spannvorrichtung gemäß dem ersten Aspekt oder einer von dessen bevorzugten Ausführungen oder ein Spannsystem gemäß dem zweiten Aspekt oder einer von dessen bevorzugten Ausführungen umfasst.

Durch den Einsatz der erfindungsgemäßen Spannvorrichtung bzw. des erfindungsgemäßen Spannsystems kann ein sicheres und zuverlässiges Festspannen einer Vielzahl unterschiedlich ausgestalteter Werkstücke bei der Werkstückbearbeitung umgesetzt werden.

Vorzugsweise ist die Werkzeugmaschine zur zerspanenden Werkstückbearbeitung eingerichtet und umfasst eine Bearbeitungsvorrichtung mit einer Arbeitsspindel, die eine Werkzeugaufnahme umfasst, in der ein Bearbeitungswerkzeug aufgenommen und durch die Arbeitsspindel angetrieben werden kann.

Gemäß einem vierten Aspekt der Erfindung wird ein Verfahren zum Festspannen eines Werkstücks bereitgestellt, das ein Bereitstellen einer Spannvorrichtung gemäß dem ersten Aspekt oder einer von dessen bevorzugten Ausführungen, ein Positionieren der Spanneinheit der bereitgestellten Spannvorrichtung, ein Einsetzen des Werkstücks in die bereitgestellte Spannvorrichtung mit positionierter Spanneinheit und ein Festspannen des eingesetzten Werkstücks umfasst. Das Positionieren der Spanneinheit umfasst dabei ein Verfahren des Positionierungskörpers der Spanneinheit relativ zum Grundkörper der bereitgestellten Spannvorrichtung entlang der Positionierungsrichtung mittels der Verfahrmechanik der bereitgestellten Spannvorrichtung in Abhängigkeit einer Abmessung des Werkstücks und das Festspannen des eingesetzten Werkstücks umfasst ein Verfahren des Spannkörpers der Spanneinheit relativ zum Positionierungskörper entlang der Spannrichtung mittels des Spannaktors der bereitgestellten Spannvorrichtung.

Damit wird ein Festspannvorgang unter Einsatz der erfindungsgemäßen Spannvorrichtung bereitgestellt, welches ein sicheres und zuverlässiges Festspannen einer Vielzahl unterschiedlich ausgestalteter Werkstücke ermöglicht.

Die diesbezüglichen Vorteile wurden bereits im Kontext der erfindungsgemäßen Spannvorrichtung genannt und gelten analog auch für das Verfahren zum Festspannen, sodass auf eine erneute Wiedergabe an dieser Stelle verzichtet wird.

In einer bevorzugten Ausführungsform handelt es sich bei dem Verfahren um ein Verfahren zum Festspannen eines Werkstücks in einer Werkzeugmaschine.

In einer bevorzugten Ausführungsform umfasst die Verfahrmechanik der bereitgestellten Spannvorrichtung eine Antriebsschnittstelle, über die eine Antriebsbewegung für die Verfahrmechanik auf diese übertragbar ist, um den Positionierungskörper relativ zum Grundkörper zu verfahren. Das Verfahren umfasst hierbei weiter ein Bereitstellen eines Verstellwerkzeugs mit einer ersten Schnittstelle und einer zweiten Schnittstelle, wobei die erste Schnittstelle des Verstellwerkzeugs derart ausgebildet ist, dass diese von einer Werkzeugaufnahme einer Arbeitsspindel der Werkzeugmaschine aufgenommen und durch die Arbeitsspindel angetrieben werden kann, und die zweite Schnittstelle des Verstellwerkzeugs und die Antriebsschnittstelle der Verfahrmechanik derart aufeinander angepasst sind, dass diese durch Relativbewegung zwischen Verstellwerkzeug und Spannvorrichtung in einen lösbaren Wirkeingriff gebracht werden können, dergestalt, dass eine Bewegung der Arbeitsspindel über das Verstellwerkzeug auf die Antriebsschnittstelle der Verfahrmechanik übertragbar ist, um so den Positionierungskörper relativ zum Grundkörper zu verfahren. Weiter umfasst das Positionieren der Spanneinheit ein Aufnehmen des bereitgestellten Verstellwerkzeugs in eine Werkzeugaufnahme einer Arbeitsspindel der Werkzeugmaschine und ein Verfahren der Arbeitsspindel und/oder der bereitgestellten Spannvorrichtung, um das aufgenommene Verstellwerkzeug in Wirkeingriff mit der Antriebsschnittstelle der Verfahrmechanik zu bringen. Weiter erfolgt dabei das Verfahren des Positionierungskörpers der Spanneinheit relativ zum Grundkörper durch ein Antreiben der Verfahrmechanik durch die Arbeitsspindel über das in Wirkeingriff gebrachte Verstellwerkzeug.

In einer bevorzugten Ausführungsform umfasst das Positionieren der Spanneinheit der bereitgestellten Spannvorrichtung weiter ein Erfassen eines Abstands des verfahrenen Positionierungskörpers zu einem Referenzpunkt der Spannvorrichtung, ein Ermitteln einer Abweichung zwischen dem erfasstem Abstand und der Abmessung des Werkstücks und ein zweites Verfahren des Positionierungskörpers relativ zum Grundkörper entlang der Positionierungsrichtung mittels der Verfahrmechanik, falls ein Betrag der ermittelten Abweichung größer ist als ein vorgegebener Grenzwert, wobei das zweite Verfahren insbesondere in Abhängigkeit der ermittelten Abweichung erfolgt.

Auf diese Weise wird ein Kontrollschritt vorgesehen, um zu überprüfen, ob der Positionierungskörper korrekt vorpositioniert wurde, oder ob gegebenenfalls nochmals nachjustiert werden muss, damit das festzuspannende Werkstück korrekt in die Spannvorrichtung eingesetzt werden kann.

Der vorgegebene Grenzwert bestimmt sich beispielsweise aus geometrischen Abmessungen der Spanneinheit, insbesondere basiert dieser auf Abmessungen einer Werkstückauflage der Spannvorrichtung auf die das Werkstück beim Einsetzen aufgesetzt wird.

Vorzugsweise umfasst das Erfassen des Abstands ein Antasten eines Punktes der Spanneinheit, insbesondere des Positionierungskörpers, und ein Antasten des Referenzpunkts mittels eine Messtasters.

Bei dem Messtaster handelt es ich vorzugsweise um einen Messtaster der Werkzeugmaschine, der vorzugsweise im Vorfeld in die Werkzeugaufnahme der Arbeitsspindel aufgenommen wird.

In einer bevorzugten Ausführungsform umfasst das Verfahren weiter ein Befestigen, insbesondere ein lösbares Befestigen, der bereitgestellten Spannvorrichtung in einem Arbeitsraum einer Werkzeugmaschine, vorzugsweise durch ein In-Wirkeingriff-bringen einer Schnittstellenvorrichtung der bereitgestellten Spannvorrichtung mit einer Aufnahmevorrichtung der Werkzeugmaschine.

Gemäß einem fünften Aspekt der Erfindung wird ein Verfahren zum Bearbeiten eines Werkstücks bereitgestellt. Das Verfahren umfasst ein Festspannen des Werkstücks gemäß einem Verfahren zum Festspannen nach dem vierten Aspekt oder einer von dessen bevorzugten Ausführungen, wobei das Verfahren zum Festspannen ein Verfahren zum Festpannen eines Werkstücks in einer Werkzeugmaschine ist und zumindest ein Befestigen, insbesondere ein lösbares Befestigen, der bereitgestellten Spannvorrichtung in einem Arbeitsraum der Werkzeugmaschine umfasst. Weiter umfasst das Verfahren zum Bearbeiten ein Bearbeiten des festgespannten Werkstücks mittels eines durch eine Bearbeitungsvorrichtung der Werkzeugmaschine aufgenommenen Bearbeitungswerkzeugs.

Auf diese Weise wird eine Bearbeitung ermöglicht, bei der eine Vielzahl unterschiedlich ausgestalteter Werkstücke sicher und zuverlässig festgespannt werden kann, um so eine genauere Bearbeitung der Werkstücke zu ermöglichen. Damit kann eine Werkstückbearbeitung mit hoher Bearbeitungsgüte ermöglicht werden.

Weitere Aspekte und deren Vorteile als auch speziellere Ausführungsbeispiele der zuvor genannten Aspekte und Ausführungsformen werden im Folgenden unter Zuhilfenahme der in den beigefügten Figuren gezeigten Zeichnungen beschrieben.
Fig. 1A bis 1C zeigen ein Ausführungsbeispiel des erfindungsgemäßen Spannsystems mit einem Ausführungsbeispiel der erfindungsgemäßen Spannvorrichtung und einem Ausführungsbeispiel des erfindungsgemäßen Verstellwerkzeugs in verschiedenen Ansichten.
Fig. 2A bis 2F zeigen einen beispielhaften Ablauf eines Ausführungsbeispiels des erfindungsgemäßen Verfahrens zum Festspannen eines Werkstücks unter Einsatz eines Ausführungsbeispiels des erfindungsgemäßen Spannsystems
Fig. 3 zeigt schematisch den Ablauf eines Ausführungsbeispiels des erfindungsgemäßen Verfahrens zum Festspannen eines Werkstücks.
Fig. 4 zeigt schematisch den Ablauf eines Ausführungsbeispiels des erfindungsgemäßen Verfahrens zum Bearbeiten eines Werkstücks.

Es wird hervorgehoben, dass die vorliegende Erfindung in keiner Weise auf die nachfolgend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Ausführliche Figurenbeschreibung

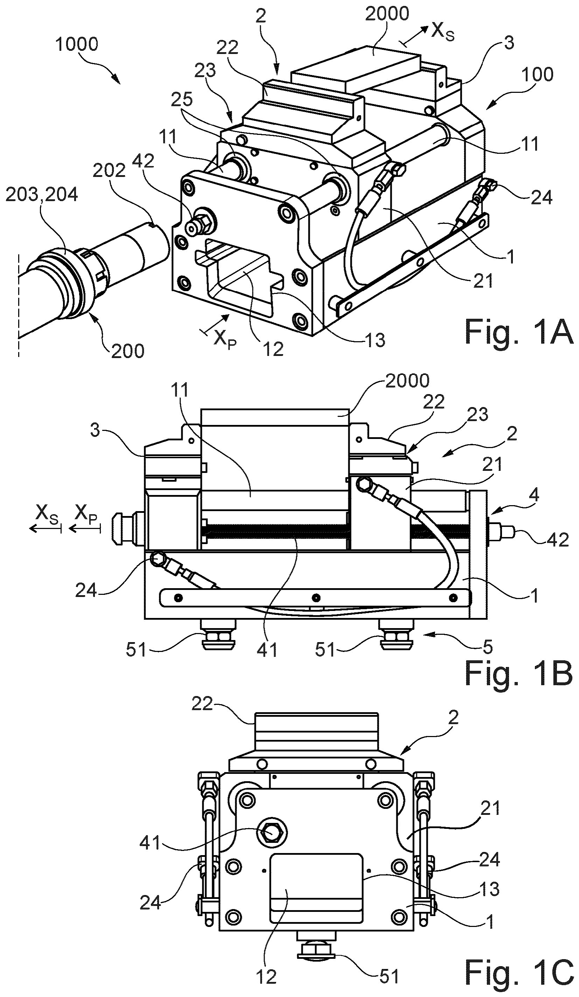

Fig. 1A bis 1C zeigen ein Ausführungsbeispiel des erfindungsgemäßen Spannsystems 1000 mit einem Ausführungsbeispiel der erfindungsgemäßen Spannvorrichtung 100 und einem Ausführungsbeispiel des erfindungsgemäßen Verstellwerkzeugs 200 in einer perspektivischen Ansicht (Fig. 1A) in einer ersten Seitenansicht (Fig. 1B) und in einer zweiten Seitenansicht (Fig. 1C).

Nachfolgend werden die Fig. 1A bis 1C gemeinsam beschrieben, da diese unterschiedlichen Perspektiven des gleichen Ausführungsbeispiels zeigen.

Das Spannsystem 1000 umfasst eine Spannvorrichtung 100 zum Festspannen eines Werkstücks 2000 sowie ein Verstellwerkzeug 200.

Die Spannvorrichtung 100 ist zum Festspannen des Werkstücks 2000 eingerichtet und umfasst einen Grundkörper 1 und zumindest eine gegenüber dem Grundkörper 1 verfahrbare Spanneinheit 2.

Die Spanneinheit umfasst wiederum einen Positionierungskörper 21 und einen Spannkörper 22, der eingerichtet ist, mit einem festzuspannenden Werkstück 2000 in Kontakt zu kommen, insbesondere über eine Spannfläche 22b des Spannkörpers.

Der Positionierungskörper 21 der Spanneinheit 2 ist entlang einer Positionierungsrichtung x_{P} beweglich am Grundkörper 1 gelagert.

Die Spannvorrichtung 100 umfasst weiter zum Umsetzen einer Positionierungsbewegung der Spanneinheit 2 eine Verfahrmechanik 4, über die der Positionierungskörper 21 relativ zum Grundkörper 1 entlang der Positionierungsrichtung x_{P} verfahrbar ist, um die Spanneinheit 2 für ein anschließendes Festspannen des Werkstücks 2000 zu positionieren.

Der Spannkörper 22 ist entlang einer Spannrichtung x_{S} beweglich am Positionierungskörper 21 gelagert.

Die Spanneinheit 2 umfasst weiter zum Umsetzen einer Spannbewegung der Spanneinheit 2 einen pneumatisch betriebenen und/oder einen hydraulisch betriebenen Spannaktor 23, über den der Spannkörper 22 relativ zum Positionierungskörper 21 entlang der Spannrichtung x_{S} verfahrbar ist, um das Werkstück 2000 festzuspannen.

Die Spannvorrichtung 100 umfasst vorzugsweise, wie in Fig. 1A bis 1C gezeigt, einen weiteren Spannkörper 3, der unbeweglich am Grundkörper 1 befestigt ist, wobei das festzuspannende Werkstück 2000 durch die Spannbewegung der Spanneinheit 2 zwischen dem Spannkörper 22 der Spanneinheit 2 und dem weiteren Spannkörper 3 festspannbar ist, wobei eine Spannfläche 22b des Spannkörpers 22 der Spanneinheit 2 vorzugsweise parallel zu einer Spannfläche des weiteren Spannkörpers 3 verläuft.

Vorzugsweise verlaufen Spannrichtung und Positionierungsrichtung parallel zueinander.

Die Spannvorrichtung 100 umfasst vorzugsweise eine Schnittstelle 24 zur Versorgung des Spannaktors mit hydraulischer und/oder pneumatischer Energie durch ein externes Hydraulik- oder Pneumatiksystem.

Die Verfahrmechanik 4 umfasst vorzugsweise einen Spindeltrieb 41, der vorzugsweise am Grundkörper 1 gelagert ist.

Vorzugsweise umfasst die Verfahrmechanik 4, wie in Fig. 1A und 1B gezeigt, eine Antriebsschnittstelle 42, über die eine Antriebsbewegung für die Verfahrmechanik 4 auf diese übertragbar ist, um den Positionierungskörper 21 relativ zum Grundkörper 1 zu verfahren. Vorzugsweise ist die Antriebsschnittstelle auf einer Außenseite des Grundkörpers 1 vorgesehen und weist insbesondere einen Profilabschnitt mit polygonalem Querschnitt auf.

Die Lagerung des Positionierungskörpers 21 ist vorzugsweise über eine Linearführung umgesetzt, über die dieser beweglich am Grundkörper 1 gelagert ist. Diese umfasst, wie in Fig. 1A bis 1C gezeigt, zwei parallel zur Positionierungsrichtung x_{P} verlaufende, am Grundkörper 1 befestigte Führungselemente 11.

Die Führungselemente 11 sind vorzugsweise als massive Führungsstangen ausgebildet mit einer kreisrunden Oberflächenkontur in einem zur Positionierungsrichtung x_{P} senkrecht stehenden Querschnitt.

Vorzugsweise umfasst die die Spannvorrichtung 100 eine Klemmeinrichtung, die zwischen einem festklemmenden Zustand und einem klemmungsfreien Zustand umschaltbar ist, wobei im festklemmenden Zustand der Positionierungskörper 21 relativ zum Grundkörper 1 durch eine von der Klemmeinrichtung aufgebrachte Klemmkraft fixiert ist, und im klemmungsfreien Zustand der Positionierungskörper 21 relativ zum Grundkörper 1 nicht durch die Klemmeinrichtung fixiert ist.

Im gezeigten Ausführungsbeispiel ist die Klemmeinrichtung 25 in Form zweier Klemmbuchsen 25 ausgeführt, die im festklemmenden Zustand die Klemmkraft in je einer Klemmschnittstelle zwischen dem Positionierungskörper 21 und zumindest einem der zwei Führungselemente 11 aufbringen.

Vorzugsweise weist der Grundkörper 1, wie in Fig. 1A und 1B gezeigt, einen Auffangbereich 12 für Späne auf, der zwischen den Führungselementen 11 der Linearführung angeordnet ist.

Der Grundkörper 1 weist ferner vorzugsweise ein oder mehrere Auslassöffnungen 13 auf, über die im Auffangbereich 12 gesammelte Späne in eine Umgebung der Spannvorrichtung 100 abführbar sind.

Die Spannvorrichtung 100 umfasst vorzugsweise, wie in Fig. 1B und 1C gezeigt, eine Schnittstellenvorrichtung 5, die derart auf eine Aufnahmevorrichtung (hier nicht gezeigt), insbesondere auf eine Aufnahmevorrichtung einer Werkzeugmaschine, angepasst ist, dass die Spannvorrichtung 100 über die Schnittstellvorrichtung 5 lösbar in der Aufnahmevorrichtung fixierbar ist.

Vorliegend umfasst die Schnittstellenvorrichtung dabei zwei beabstandete Schnittstellenelemente 51, die jeweils in einer Aufnahmeschnittstelle der Aufnahmevorrichtung aufgenommen und dort fixiert werden können.

Zum Umsetzen der Positionierungsbewegung des Positionierungskörpers 21 durch die Verfahrmechanik 4 kann vorzugsweise das Verstellwerkzeug 200 zum Einsatz kommen.

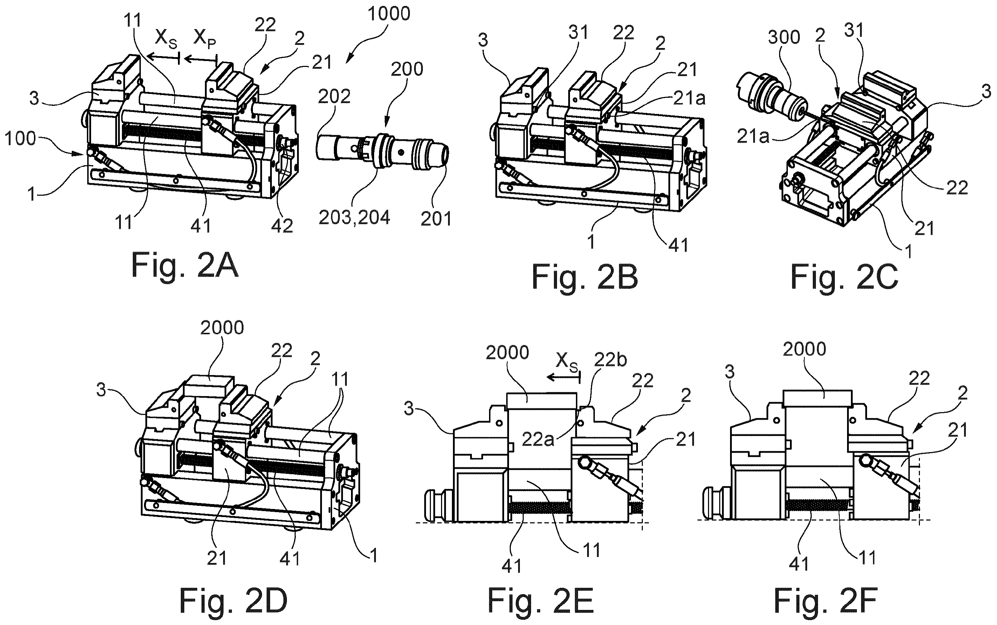

Das Verstellwerkzeug 200 umfasst eine erste Schnittstelle 201 und eine zweite Schnittstelle 202, wobei die erste Schnittstelle 201 nicht in Fig. 1A dargestellt ist (siehe hierzu Fig. 2A).

Die erste Schnittstelle 201 des Verstellwerkzeugs 200 ist vorzugsweise derart ausgebildet, dass diese von einer Werkzeugaufnahme einer Arbeitsspindel einer Werkzeugmaschine aufgenommen und durch die Arbeitsspindel angetrieben werden kann.

Die zweite Schnittstelle 202 des Verstellwerkzeugs 200 und die Antriebsschnittstelle 42 der Verfahrmechanik 4 sind derart aufeinander angepasst, dass diese durch Relativbewegung zwischen Verstellwerkzeug 200 und Spannvorrichtung 100 in einen lösbaren Wirkeingriff gebracht werden können.

Die Ausgestaltung erfolgt derart, dass insbesondere eine Bewegung der Arbeitsspindel über das Verstellwerkzeug 200 auf die Antriebsschnittstelle 42 der Verfahrmechanik 4 übertragbar ist, um so den Positionierungskörper 21 relativ zum Grundkörper 1 zu verfahren.

Fig. 1A zeigt hierzu einen Zustand, in dem das Verstellwerkzeug 200 nicht in Wirkeingriff mit der Antriebsschnittstelle steht.

Damit wird eine Spannvorrichtung 100 bereitgestellt, die ein sicheres und zuverlässiges Festspannen einer Vielzahl unterschiedlich gestalteter Werkstücke 2000 ermöglicht.

So kann das Festspannen vorteilhafter Weise in zwei Stufen erfolgen, wobei in einer ersten Stufe eine Vorpositionierung erfolgen kann, im Zuge derer die Spanneinheit 2 durch die Verfahrmechanik 4 verfahren wird, um diese "grob" an die Abmessungen des festzuspannenden Werkstücks 2000 anzupassen. In einer zweiten Stufe kann dann das Festspannen des Werkstücks 2000 durch die eigentliche Spannbewegung mittels des Spannaktors 23 erfolgen.

Fig. 2A bis 2F zeigen einen beispielhaften chronologischen Ablauf eines Ausführungsbeispiels des erfindungsgemäßen Verfahrens zum Festspannen eines Werkstücks 2000 unter Einsatz eines Ausführungsbeispiels des erfindungsgemäßen Spannsystems 1000.

Das Ausführungsbeispiel des Spannsystems 1000 entspricht im Wesentlichen dem in den Fig. 1A bis 1C gezeigten Ausführungsbeispiel, sodass auf eine erneute Beschreibung an dieser Stelle verzichtet wird. Es wird angemerkt, dass das erfindungsgemäße Verfahren zum Festspannen jedoch nicht auf den Einsatz des Spannsystems gemäß des besagten Ausführungsbeispiel beschränkt ist.

Fig. 2A zeigt einen Zustand der Spannvorrichtung 100 vor einem Positionieren der Spanneinheit 2 in einer perspektivischen Ansicht.

Das Positionieren des Spanneinheit 2 erfolgt hierbei durch ein Verfahren des Positionierungskörpers 21 relativ zum Grundkörper 1 entlang der Positionierungsrichtung x_{P} mittels der Verfahrmechanik 4, wobei die Verfahrmechanik 4 über eine Antriebsbewegung des Verstellwerkzeugs 200 angetrieben wird, das zuvor mit der Antriebsschnittstelle 41 der Verfahrmechanik 4 in Wirkeingriff gebracht wird.

Fig. 2B zeigt einen Zustand nach einem Positionieren der Spanneinheit 2 in einer perspektivischen Ansicht, sodass in Zusammenschau mit Fig. 2A die Positionierungsbewegung der Spanneinheit 2 erkennbar ist.

Fig. 2C zeigt einen Zustand der Spannvorrichtung 100 kurz nach einem Erfassen eines Abstands des verfahrenen Positionierungskörpers 21 zu einem Referenzpunkt 31 der Spannvorrichtung 100 in einer perspektivischen Ansicht.

Hierzu wurden der Referenzpunkt 31, der sich insbesondere am weiteren Spannkörper 3 befindet, und ein Messpunkt 21a am Positionierungskörper 21 mittels eines Messtasters 3000 angetastet, um daraus einen Abstand zwischen diesen Referenzpunkt 31 und Messpunkt 21a, insbesondere in Bezug auf die Positionierungsrichtung x_{P}, zu erfassen.

Diese Abstandserfassung dient der Überprüfung, ob die Positionierungsbewegung wie gewünscht umgesetzt wurde und das festzuspannende Werkstück 2000 ordnungsgemäß in die Spannvorrichtung eingesetzt werden kann.

Hierzu wird eine Abweichung zwischen dem erfassten Abstand und einer Abmessung des Werkstücks ermittelt. Falls ein Betrag der ermittelten Abweichung größer ist als ein vorgegebener Grenzwert erfolgt ein zweites Verfahren des Positionierungskörpers 21 relativ zum Grundkörper 1 entlang der Positionierungsrichtung mittels der Verfahrmechanik 4, was im gezeigten Ablauf gemäß Fig. 2A bis 2F jedoch nicht der Fall ist.

Fig. 2D zeigt einen Zustand der Spannvorrichtung 100 nach einem Einsetzen des Werkstücks 2000 in die Spannvorrichtung 100 in einer perspektivischen Ansicht.

Fig. 2E zeigt den Zustand der Spannvorrichtung 100 gemäß Fig. 2D in einer Ausschnittsdarstellung in einer Seitenansicht.

Das eingesetzte Werkstück 2000 liegt hierbei vorzugsweise auf einer Auflagefläche 22a des Spannkörpers 22 auf und hat insbesondere noch keinen kraftübertragenden Kontakt zu einer Spannfläche 22b des Spannkörpers 22. Entsprechend ist in Fig. 2E ein Abstand zwischen Spannfläche 22b und Werkstück 2000 dargestellt.

Fig. 2F zeigt einen Zustand der Spannvorrichtung 100 nach einem Festspannen des eingesetzten Werkstücks 2000 in einer Ausschnittsdarstellung in einer Seitenansicht.

Das Festspannen erfolgte dabei durch ein Verfahren des Spannkörpers 22 der Spanneinheit 2 relativ zum Positionierungskörper 21 entlang der Spannrichtung x_{S} mittels des Spannaktors 23 der bereitgestellten Spannvorrichtung 100, um so das Werkstückstück in der Spannvorrichtung 100 festzuspannen.

Aus dem Ablauf gemäß der Fig. 2A bis 2F ist insbesondere das vorteilhafte zweistufige Festspannen eines Werkstücks 2000 zu erkennen. So erfolgt in der ersten Stufe (vgl. Fig. 2A und 2B) eine Vorpositionierung, im Zuge derer die Spanneinheit 2 durch die Verfahrmechanik 4 verfahren wird, um diese "grob" an die Abmessungen des festzuspannenden Werkstücks 2000 anzupassen.

In einer zweiten Stufe (vgl. Fig. 2E und 2F) kann dann das Festspannen des Werkstücks 2000 durch die eigentliche Spannbewegung des Spannkörpers 22 mittels des Spannaktors 23 erfolgen.

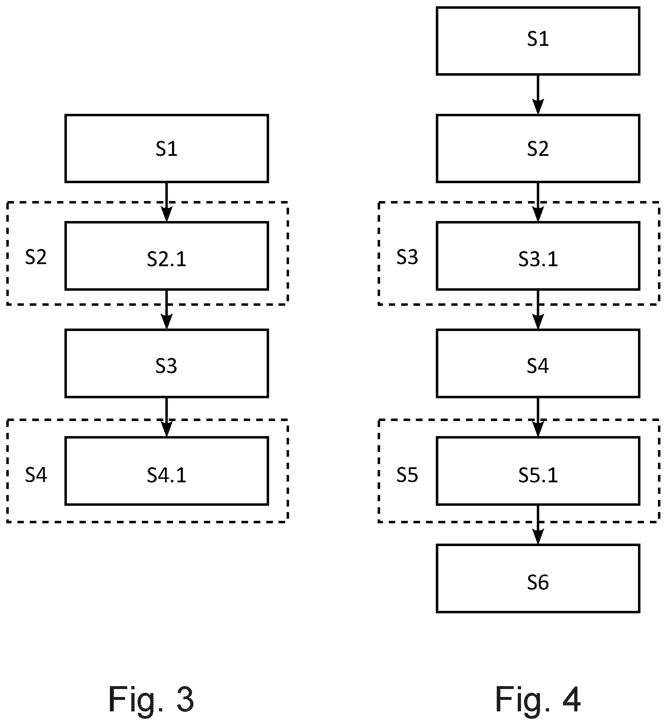

Fig. 3 zeigt schematisch den Ablauf eines Ausführungsbeispiels des erfindungsgemäßen Verfahrens zum Festspannen eines Werkstücks.

In Schritt S1 erfolgt ein Bereitstellen einer Spannvorrichtung.

Die in Schritt S1 bereitgestellte Spannvorrichtung ist zum Festspannen eines Werkstücks eingerichtet umfasst dazu einen Grundkörper und zumindest eine gegenüber dem Grundkörper verfahrbare Spanneinheit. Die Spanneinheit umfasst ihrerseits einen Positionierungskörper und einen Spannkörper, wobei der Spannkörper eingerichtet ist, mit einem festzuspannenden Werkstück in Kontakt zu kommen. Der Positionierungskörper der Spanneinheit ist entlang einer Positionierungsrichtung beweglich am Grundkörper gelagert, wobei die Spannvorrichtung zum Umsetzen einer Positionierungsbewegung der Spanneinheit eine Verfahrmechanik umfasst, über die der Positionierungskörper relativ zum Grundkörper entlang der Positionierungsrichtung verfahrbar ist, um die Spanneinheit für ein anschließendes Festspannen des Werkstücks zu positionieren. Der Spannkörper ist entlang einer Spannrichtung beweglich am Positionierungskörper gelagert, wobei die Spanneinheit zum Umsetzen einer Spannbewegung der Spanneinheit einen pneumatisch betriebenen und/oder einen hydraulisch betriebenen Spannaktor umfasst, über den der Spannkörper relativ zum Positionierungskörper entlang der Spannrichtung verfahrbar ist, um das Werkstück festzuspannen.

In Schritt S2 erfolgt ein Positionieren der Spanneinheit der in Schritt S1 bereitgestellten Spannvorrichtung mit dem Teilschritt S2.1, in dem ein Verfahren des Positionierungskörpers der Spanneinheit relativ zum Grundkörper der bereitgestellten Spannvorrichtung entlang der Positionierungsrichtung mittels der Verfahrmechanik der bereitgestellten Spannvorrichtung in Abhängigkeit einer Abmessung des Werkstücks erfolgt.

In Schritt S3 erfolgt ein Einsetzen des Werkstücks in die bereitgestellte Spannvorrichtung mit der in Schritt S2 positionierten Spanneinheit.

In Schritt S4 erfolgt ein Festspannen des in Schritt S3 eingesetzten Werkstücks mit dem Teilschritt S4.1, in dem ein Verfahren des Spannkörpers der Spanneinheit relativ zum Positionierungskörper entlang der Spannrichtung mittels des Spannaktors der bereitgestellten Spannvorrichtung erfolgt.

Fig. 4 zeigt schematisch den Ablauf eines Ausführungsbeispiels des erfindungsgemäßen Verfahrens zum Bearbeiten eines Werkstücks mittels einer Werkzeugmaschine.

In Schritt S1 erfolgt ein Bereitstellen einer Spannvorrichtung.

Die in Schritt S1 bereitgestellte Spannvorrichtung ist zum Festspannen eines Werkstücks eingerichtet und umfasst dazu einen Grundkörper und zumindest eine gegenüber dem Grundkörper verfahrbare Spanneinheit. Die Spanneinheit umfasst ihrerseits einen Positionierungskörper und einen Spannkörper, wobei der Spannkörper eingerichtet ist, mit einem festzuspannenden Werkstück in Kontakt zu kommen. Der Positionierungskörper der Spanneinheit ist entlang einer Positionierungsrichtung beweglich am Grundkörper gelagert, wobei die Spannvorrichtung zum Umsetzen einer Positionierungsbewegung der Spanneinheit eine Verfahrmechanik umfasst, über die der Positionierungskörper relativ zum Grundkörper entlang der Positionierungsrichtung verfahrbar ist, um die Spanneinheit für ein anschließendes Festspannen des Werkstücks zu positionieren. Der Spannkörper ist entlang einer Spannrichtung beweglich am Positionierungskörper gelagert, wobei die Spanneinheit zum Umsetzen einer Spannbewegung der Spanneinheit einen pneumatisch betriebenen und/oder einen hydraulisch betriebenen Spannaktor umfasst, über den der Spannkörper relativ zum Positionierungskörper entlang der Spannrichtung verfahrbar ist, um das Werkstück festzuspannen.

In Schritt S2 erfolgt ein Befestigen, insbesondere ein lösbares Befestigen, der in Schritt S1 bereitgestellten Spannvorrichtung in einem Arbeitsraum der Werkzeugmaschine.

In Schritt S3 erfolgt ein Positionieren der Spanneinheit der in Schritt S2 befestigten Spannvorrichtung mit dem Teilschritt S3.1, in dem ein Verfahren des Positionierungskörpers der Spanneinheit relativ zum Grundkörper der Spannvorrichtung entlang der Positionierungsrichtung mittels der Verfahrmechanik der Spannvorrichtung in Abhängigkeit einer Abmessung des Werkstücks erfolgt.

In Schritt S4 erfolgt ein Einsetzen des Werkstücks in die Spannvorrichtung mit der in Schritt S3 positionierten Spanneinheit.

In Schritt S5 erfolgt ein Festspannen des in Schritt S4 eingesetzten Werkstücks mit dem Teilschritt S5.1, in dem ein Verfahren des Spannkörpers der Spanneinheit relativ zum Positionierungskörper entlang der Spannrichtung mittels des Spannaktors der Spannvorrichtung erfolgt.

In Schritt S6 erfolgt ein Bearbeiten des in Schritt S5 festgespannten Werkstücks mittels eines durch eine Bearbeitungsvorrichtung der Werkzeugmaschine aufgenommenen Bearbeitungswerkzeugs.

Vorstehend wurden Ausführungsbeispiele der vorliegenden Erfindung sowie deren Vorteile detailliert unter Bezugnahme auf die beigefügten Figuren beschrieben.

Es wird erneut hervorgehoben, dass die vorliegende Erfindung in keiner Weise auf die vorstehend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Liste der Bezugszeichen

- 1: Grundkörper
- 2: Spanneinheit
- 3: weiterer Spannkörper
- 4: Verfahrmechanik
- 5: Schnittstellenvorrichtung
- 11: Führungselement
- 12: Auffangbereich
- 13: Auslassöffnung
- 21: Positionierungskörper
- 21a: Messpunkt
- 22: Spannkörper
- 22a: Auflagefläche
- 22b: Spannfläche
- 23: Spannaktor
- 24: Schnittstelle zur Versorgung des Spannaktors
- 25: Klemmbuchse
- 31: Referenzpunkt
- 41: Spindeltrieb
- 42: Antriebsschnittstelle
- 51: Schnittstellenelement
- 100: Spannvorrichtung
- 200: Verstellwerkzeug
- 201: erste Schnittstelle
- 202: zweite Schnittstelle
- 203: Drehmomentbegrenzer
- 204: Ausgleichselement
- 1000: Spannsystem
- 2000: Werkstück
- 3000: Messtaster

- x_{P}: Positionierungsrichtung
- x_{S}: Spannrichtung

## Patentansprüche

1. Spannvorrichtung (100) zum Einsatz in einer Werkzeugmaschine, wobei
die Spannvorrichtung (100) zum Festspannen eines Werkstücks (2000) eingerichtet ist und dazu einen Grundkörper (1) und zumindest eine gegenüber dem Grundkörper (1) verfahrbare Spanneinheit (2) mit einem Positionierungskörper (21) und einem Spannkörper (22) umfasst,
wobei der Spannkörper (22) eingerichtet ist, mit einem festzuspannenden Werkstück (2000) in Kontakt zu kommen,
der Positionierungskörper (21) der Spanneinheit (2) entlang einer Positionierungsrichtung beweglich am Grundkörper (1) gelagert ist, wobei die Spannvorrichtung (100) zum Umsetzen einer Positionierungsbewegung der Spanneinheit (2) eine Verfahrmechanik (4) umfasst, über die der Positionierungskörper (21) relativ zum Grundkörper (1) entlang der Positionierungsrichtung verfahrbar ist, um die Spanneinheit (2) für ein anschließendes Festspannen des Werkstücks (2000) zu positionieren, wobei die Verfahrmechanik (4)vorzugsweise eine selbsthemmende Verfahrmechanik (4) ist,
und der Spannkörper (22) entlang einer Spannrichtung beweglich am Positionierungskörper (21) gelagert ist, wobei die Spannrichtung insbesondere parallel zur Positionierungsrichtung verläuft, und wobei die Spanneinheit (2) zum Umsetzen einer Spannbewegung der Spanneinheit (2) einen pneumatisch betriebenen und/oder einen hydraulisch betriebenen Spannaktor (23) umfasst, über den der Spannkörper (22) relativ zum Positionierungskörper (21) entlang der Spannrichtung verfahrbar ist, um das Werkstück (2000) festzuspannen.

2. Spannvorrichtung (100) nach Anspruch 1, wobei
der Positionierungskörper (21) in einem ersten Verfahrbereich verfahrbar ist, der sich von einer ersten Endposition des Positionierungskörper (21) in Bezug auf den Grundkörper (1) bis zu einer zweiten Endposition des Positionierungskörpers (21) in Bezug auf den Grundkörper (1) erstreckt,
und der Spannkörper (22) in einem zweiten Verfahrbereich verfahrbar ist, der sich von einer ersten Endposition des Spannkörpers (22) in Bezug auf den Positionierungskörper (21) bis zu einer zweiten Endposition des Spannkörpers (22) in Bezug auf den Positionierungskörper (21) erstreckt,
wobei eine Länge des zweiten Verfahrbereichs kleiner gleich 50% einer Länge des ersten Verfahrbereichs ist, vorzugsweise ist die Länge des zweiten Verfahrbereichs kleiner gleich 10% und besonders bevorzugt kleiner gleich 5 % der Länge des ersten Verfahrbereichs.

3. Spannvorrichtung (100) nach einem der Ansprüche 1 oder 2, wobei
die Spannvorrichtung (100) eine Klemmeinrichtung (25) umfasst, die zwischen einem festklemmenden Zustand und einem klemmungsfreien Zustand umschaltbar ist,
wobei im festklemmenden Zustand der Positionierungskörper (21) relativ zum Grundkörper (1) durch eine von der Klemmeinrichtung (25) aufgebrachte Klemmkraft fixiert ist,
und im klemmungsfreien Zustand der Positionierungskörper (21) relativ zum Grundkörper (1) nicht durch die Klemmeinrichtung (25) fixiert ist.

4. Spannvorrichtung (100) nach einem der Ansprüche 1 bis 3, wobei
der Positionierungskörper (21) über eine Linearführung beweglich am Grundkörper (1) gelagert ist, die zwei parallel zur Positionierungsrichtung verlaufende, am Grundkörper (1) befestigte Führungselemente (11) umfasst, deren Oberflächenkonturen insbesondere konvex ausgestaltet sind.

5. Spannvorrichtung (100) nach Anspruch 4, wobei
der Grundkörper (1) einen Auffangbereich (12) für Späne aufweist, der zwischen den Führungselementen (11) der Linearführung angeordnet ist, wobei der Grundkörper (1) vorzugsweise ein oder mehrere Auslassöffnungen (13) umfasst, über die im Auffangbereich (12) gesammelte Späne in eine Umgebung der Spannvorrichtung (100) abführbar sind.

6. Spannvorrichtung (100) nach Anspruch 3 und einem der Ansprüche 4 oder 5, wobei
die Klemmeinrichtung (25) an der Linearführung angeordnet ist und eingerichtet ist, im festklemmenden Zustand die Klemmkraft in einer Klemmschnittstelle zwischen dem Positionierungskörper (21) und zumindest einem der zwei Führungselemente (11) aufzubringen,
wobei die Klemmeinrichtung (25) vorzugsweise als am Positionierungskörper (21) befestigte Klemmbuchse (25) ausgeführt ist.

7. Spannvorrichtung (100) nach einem der Ansprüche 1 bis 6, wobei
die Spannvorrichtung (100) eine Schnittstellenvorrichtung (5) umfasst, die derart auf eine Aufnahmevorrichtung, insbesondere auf eine Aufnahmevorrichtung einer Werkzeugmaschine, angepasst ist, dass die Spannvorrichtung (100) über die Schnittstellvorrichtung (5) lösbar in der Aufnahmevorrichtung fixierbar ist.

8. Spannvorrichtung (100) nach einem der Ansprüche 1 bis 7, wobei
die Verfahrmechanik (4) eine Antriebsschnittstelle (42) umfasst, über die eine Antriebsbewegung für die Verfahrmechanik (4) auf diese übertragbar ist, um den Positionierungskörper (21) relativ zum Grundkörper (1) zu verfahren.

9. Spannsystem (1000) zum Einsatz in einer Werkzeugmaschine, umfassend:
- eine Spannvorrichtung (100) nach Anspruch 8;
- ein Verstellwerkzeug (200) mit einer ersten Schnittstelle (201) und einer zweiten Schnittstelle (202),
wobei die erste Schnittstelle (201) des Verstellwerkzeugs (200) derart ausgebildet ist, dass diese von einer Werkzeugaufnahme einer Arbeitsspindel der Werkzeugmaschine aufgenommen und durch die Arbeitsspindel angetrieben werden kann,
und die zweite Schnittstelle (202) des Verstellwerkzeugs (200) und die Antriebsschnittstelle (42) der Verfahrmechanik (4) derart aufeinander angepasst sind, dass diese durch Relativbewegung zwischen Verstellwerkzeug (200) und Spannvorrichtung (100) in einen lösbaren Wirkeingriff gebracht werden können,
dergestalt, dass eine Bewegung der Arbeitsspindel über das Verstellwerkzeug (200) auf die Antriebsschnittstelle (42) der Verfahrmechanik (4) übertragbar ist, um so den Positionierungskörper (21) relativ zum Grundkörper (1) zu verfahren,
und wobei das Verstellwerkzeug (200) vorzugsweise einen zwischen der ersten Schnittstelle (201) und der zweiten Schnittstelle (202) angeordneten Drehmomentbegrenzer (203) und/oder ein vorgespanntes Ausgleichselement (204) umfasst, das eine Ausgleichsbewegung der ersten Schnittstelle (201) relativ zur zweiten Schnittstelle (202) gestattet.

10. Werkzeugmaschine zur Bearbeitung eines Werkstücks (2000), umfassend:
eine Spannvorrichtung (100) nach einem der Ansprüche 1 bis 8 oder ein Spannsystem (1000) nach Anspruch 9.

11. Verfahren zum Festspannen eines Werkstücks (2000) in einer Werkzeugmaschine, umfassend:
- Bereitstellen einer Spannvorrichtung (100) nach einem der Ansprüche 1 bis 8;
- Positionieren der Spanneinheit (2) der bereitgestellten Spannvorrichtung (100), wiederum umfassend:
- Verfahren des Positionierungskörpers (21) der Spanneinheit (2) relativ zum Grundkörper (1) der bereitgestellten Spannvorrichtung (100) entlang der Positionierungsrichtung mittels der Verfahrmechanik (4) der bereitgestellten Spannvorrichtung (100) in Abhängigkeit einer Abmessung des Werkstücks (2000);
- Einsetzen des Werkstücks (2000) in die bereitgestellte Spannvorrichtung (100) mit positionierter Spanneinheit (2); und
- Festspannen des eingesetzten Werkstücks (2000), wiederum umfassend:
- Verfahren des Spannkörpers (22) der Spanneinheit (2) relativ zum Positionierungskörper (21) entlang der Spannrichtung mittels des Spannaktors (23) der bereitgestellten Spannvorrichtung (100).

12. Verfahren nach Anspruch 11, wobei
die Verfahrmechanik (4) der bereitgestellten Spannvorrichtung (100) eine Antriebsschnittstelle (42) umfasst, über die eine Antriebsbewegung für die Verfahrmechanik (4) auf diese übertragbar ist, um den Positionierungskörper (21) relativ zum Grundkörper (1) zu verfahren,
und das Verfahren weiter umfasst:
- Bereitstellen eines Verstellwerkzeugs (200) mit einer ersten Schnittstelle (201) und einer zweiten Schnittstelle (202), wobei die erste Schnittstelle (201) des Verstellwerkzeugs (200) derart ausgebildet ist, dass diese von einer Werkzeugaufnahme einer Arbeitsspindel der Werkzeugmaschine aufgenommen und durch die Arbeitsspindel angetrieben werden kann, und die zweite Schnittstelle (202) des Verstellwerkzeugs (200) und die Antriebsschnittstelle (42) der Verfahrmechanik (4) derart aufeinander angepasst sind, dass diese durch Relativbewegung zwischen Verstellwerkzeug (200) und Spannvorrichtung (100) in einen lösbaren Wirkeingriff gebracht werden können, dergestalt, dass eine Bewegung der Arbeitsspindel über das Verstellwerkzeug (200) auf die Antriebsschnittstelle (42) der Verfahrmechanik (4) übertragbar ist, um so den Positionierungskörper (21) relativ zum Grundkörper (1) zu verfahren;
wobei das Positionieren der Spanneinheit (2) weiter umfasst:
- Aufnehmen des bereitgestellten Verstellwerkzeugs (200) in eine Werkzeugaufnahme einer Arbeitsspindel der Werkzeugmaschine;
- Verfahren der Arbeitsspindel und/oder der bereitgestellten Spannvorrichtung (100), um das aufgenommene Verstellwerkzeug (200) in Wirkeingriff mit der Antriebsschnittstelle (42) der Verfahrmechanik (4) zu bringen;
und wobei das Verfahren des Positionierungskörpers (21) der Spanneinheit (2) relativ zum Grundkörper (1) durch ein Antreiben der Verfahrmechanik (4) durch die Arbeitsspindel über das in Wirkeingriff gebrachte Verstellwerkzeug (200) erfolgt.

13. Verfahren nach einem der Ansprüche 11 oder 12, wobei
das Positionieren der Spanneinheit (2) der bereitgestellten Spannvorrichtung (100) weiter umfasst:
- Erfassen eines Abstands des verfahrenen Positionierungskörpers (21) zu einem Referenzpunkt (31) der Spannvorrichtung (100);
- Ermitteln einer Abweichung zwischen dem erfassten Abstand und der Abmessung des Werkstücks (2000); und
- zweites Verfahren des Positionierungskörpers (21) relativ zum Grundkörper (1) entlang der Positionierungsrichtung mittels der Verfahrmechanik (4), falls ein Betrag der ermittelten Abweichung größer ist als ein vorgegebener Grenzwert, wobei das zweite Verfahren insbesondere in Abhängigkeit der ermittelten Abweichung erfolgt.

14. Verfahren nach einem der Ansprüche 11 bis 13, wobei
das Verfahren weiter ein Befestigen, insbesondere ein lösbares Befestigen, der bereitgestellten Spannvorrichtung (100) in einem Arbeitsraum der Werkzeugmaschine umfasst.

15. Verfahren zum Bearbeiten eines Werkstücks (2000) mittels einer Werkzeugmaschine, umfassend:
- Festspannen des Werkstücks (2000) gemäß einem Verfahren zum Festspannen eines Werkstücks (2000) nach Anspruch 14; und
- Bearbeiten des festgespannten Werkstücks (2000) mittels eines durch eine Bearbeitungsvorrichtung der Werkzeugmaschine aufgenommenen Bearbeitungswerkzeugs.
